# EUROPÄISCHE PATENTSCHRIFT

(11) **EP 0 509 274 B1**
(45) Veröffentlichungstag und Bekanntmachung des Hinweises auf die Patenterteilung: **22.11.1995**
(21) Anmeldenummer: 92105031.6
(22) Anmeldetag: 24.03.1992
(51) Int. Cl.: C09B 7/02, C09B 67/14, C09B 67/54

(54) **Verfahren zur Reinigung von Indigo**
Process for the purification of indigo
Procédé de purification de l'indigo

(30) Priorität: 15.04.1991 US 684874
(43) Veröffentlichungstag der Anmeldung: 21.10.1992
(73) Patentinhaber: BASF Aktiengesellschaft, 67063 Ludwigshafen (DE)
(72) Erfinder: Kohlhaupt,Reinhold, Dr., W-6710 Frankenthal (DE)

(56) Entgegenhaltungen:
- EP-A- 0 335 524
- DE-B- 2 734 951

## Beschreibung

Indigo, der mengenmäßig weltweit größte synthetische Textilfarbstoff, enthält trotz ausgereifter Produktionsverfahren noch Verunreinigungen, so z.B. bis zu 0,6 Gew.-% Anilin und 0,4 Gew.-% N-Methylanilin. Ferner sind in noch geringeren Mengen weitere Verbindungen enthalten, die man gerne entfernen möchte.

Es war daher Aufgabe der vorliegenden Erfindung, ein wirkungsvolles und wirtschaftliches Verfahren zur Reinigung von Indigo zu entwickeln, nach welchem der Farbstoff frei oder zumindest sehr weitgehend frei von aromatischen Aminen und anderen Verunreinigungen erhalten wird.

Versuche, die im Indigo vorhandenen aromatischen Amine durch bekannte Reinigungsverfahren, z.B. durch Waschen oder durch Ausrühren mit verdünnten Säuren, durch Wasserdampfdestillation oder durch Extraktion mit organischen Lösemitteln zu entfernen, waren bisher nicht erfolgreich, selbst nicht mit feinstgemahlenem Farbstoff.

Es wurde nun gefunden, daß man sehr weitgehend gereinigten Indigo erhält, wenn man den Farbstoff nach der Synthese zunächst in sein Sulfat überführt, ihn dann durch Hydrolyse wieder freisetzt und den so zurückgewonnenen Indigo anschließend einer Wasserstoffperoxidbehandlung unterzieht.

Durch die Schwefelsäurebehandlung werden die als Verunreinigung enthaltenen Aniline ebenfalls in ihre Sulfate übergeführt und gelöst, so daß sie durch Filtration abgetrennt werden können. Durch eine an die Hydrolyse des Indigosulfates anschließende Behandlung mit Wasserstoffperoxid werden weitere Verunreinigungen überraschenderweise oxidativ zerstört, so daß schließlich reiner Indigo erhalten wird. Auch ohne vorherige Anilinabreicherung durch Indigosulfatbildung können andere Verunreinigungen des technischen Indigos durch Wasserstoffperoxidbehandlung zerstört werden.

Zur Sulfatbildung können sowohl wasserhaltiger Indigoteig als auch der getrocknete Farbstoff mit Schwefelsäure umgesetzt werden. Die Konzentration der hierbei verwendeten Schwefelsäure liegt je nach dem Trockengehalt des Indigos bei 60 bis 100 Gew.-%.

Zur Vermeidung von Ausbeuteverlusten durch Sulfierung des Indigos wählt man eine möglichst niedrige Reaktionstemperatur von 0 bis 60°C. Zur Hydrolyse des gebildeten Indigosulfates wird dieses mit Wasser unter Rückbildung von Indigo umgesetzt. Die oxidative Zerstörung der im Indigo vorhandenen weiteren Verunreinigungen wird durch Behandlung mit einer 0,1 bis 10,0 gew.-%igen verdünnt schwefelsauren Wasserstoffperoxidlösung bei 0 bis 100°C durchgeführt, wobei die Schwefelsäurekonzentration 1,0 bis 10,0 Gew.-% beträgt.

Das bei der Filtration des Indigosulfates anfallende schwefelsaure Filtrat kann wiederholt zur Sulfatbildung verwendet werden.

Das erfindungsgemäße Verfahren kann besonders vorteilhaft so durchgeführt werden, daß man 1 Teil Indigopulver in 10 bis 20 Teilen, bevorzugt in 15 Teilen, einer 65 bis 85 gew.-%igen, bevorzugt einer 75 gew.-%igen, Schwefelsäure bei 0 bis 60°C, bevorzugt bei 25°C, verrührt. Nach einer Reaktionszeit von 0,5 bis 3,0 Stunden, bevorzugt von 1 Stunde, bei 25°C wird das in quantitativer Ausbeute gebildete schwarzbraune Indigosulfat auf einer Nutsche abfiltriert. Das die Sulfate der aromatischen Amine gelöst enthaltene schwefelsaure Filtrat mit einer Schwefelsäurekonzentration von 75 Gew.-% kann in der Regel zehnmal und auch noch häufiger zur Indigosulfatbildung wieder eingesetzt und dann der Schwefelsäurerückspaltung zugeführt werden.

Das bei der Filtration des Indigosulfates erhaltene Filtergut wird durch Waschen mit Wasser von 10 bis 50°C, bevorzugt von 20°C, auf der Nutsche hydrolysiert. Der hierbei zurückgebildete Indigo wird anschließend auf der Nutsche mit einer 0,1 bis 10,0 gew.-%igen, bevorzugt 3,0 gew.-%igen, wäßrigen Wasserstoffperoxidlösung, welche 1 bis 10,0 Gew.-% Schwefelsäure, bevorzugt 5,0 Gew.-%, Schwefelsäure enthält, bei 10 bis 50°C, bevorzugt bei 20°C, gewaschen. Das Gewichtsverhältnis Indigo zu Wasserstoffperoxidlösung liegt zweckmäßigerweise im Bereich von 1:10 bis 1:40, vorzugsweise 1:20 bis 1:30. Man kann auch sogleich mit der Wasserstoffperoxidlösung waschen.

Nach dem Waschen mit Wasser und Trocknen des in einer Ausbeute von über 99 % rückgewonnenen, gereinigten Indigos (Reingehalt ≧ 96 %, fotometrisch gemessen), enthält dieser nur noch ungefähr 0,02 bis 0,06 % Anilin und 0 bis 0,005 % N-Methylanilin.

Die folgenden Beispiele sollen das Verfahren näher erläutern. Die genannten Teile und Prozentangaben beziehen sich auf das Gewicht.

### Beispiel 1

In 3 000 Teile Schwefelsäure (75 %ig) werden bei 20 bis 25°C 200 Teile Indigopulver eingerührt. Das Reaktionsgemisch wird 1 Stunde bei dieser Temperatur weitergerührt und anschließend über eine Nutsche filtriert. Das schwarzbraune Indigosulfat wird auf der Nutsche zunächst mit 100 Teilen 75 %iger Schwefelsäure von 20 bis 25°C und anschließend mit 5 000 Teilen einer 3 %igen Wasserstoffperoxidlösung von 20 bis 25°C gewaschen. Nach einer weiteren Wäsche des durch Hydrolyse rückgebildeten Indigos mit 500 Teilen Wasser wird dieser getrocknet, wobei 199,5 Teile des Farbstoffes entsprechend einer Ausbeute von 99,8 % d.Th. erhalten werden. Der Indigoreingehalt liegt bei 97,0 % (fotometrisch gemessen). Der Anilingehalt beträgt 0,021 %, der N-Methylanilingehalt liegt bei < 10 ppm.

Bei der Abfiltration des Indigosulfates werden 2 512 Teile schwefelsaures Filtrat erhalten, welches nach der Zugabe von 488 Teilen Schwefelsäure (75 %ig) erneut zur Indigosulfatbildung eingesetzt wird.

### Beispiel 2

Nach 5-maligem Wiedereinsatz des Indigosulfat-Filtrates wird dieses, wie bei Beispiel 1 beschrieben, durch soviel Teile Schwefelsäure (75 %ig) ergänzt, daß insgesamt 3 000 Teile 75 %ige Schwefelsäure vorliegen.

Dann wird verfahren wie bei Beispiel 1 beschrieben.

Erhalten werden 199,3 Teile Indigo (99,7 % d.Th.) mit einem Reingehalt von 96,0 % (fotometrisch gemessen). Der Farbstoff enthält 0,056 % Anilin und 0,01 % N-Methylanilin.

### Beispiel 3

Nach 10-maligem Wiedereinsatz des Indigosulfat-Filtrates wird wie bei Beispiel 2 verfahren.

199,8 Teile Indigo (99,9 % d.Th.) mit einem Reingehalt von 96,0 % werden erhalten. 0,056 % Anilin und 0,007 % N-Methylanilin sind im Farbstoff enthalten.

### Beispiel 4

182 Teile wasserhaltiger Indigoteig (Trockengehalt 27,5 %), enthaltend 50 Teile Indigo werden in einem Rührreaktor unter Kühlung bei 20 bis 25°C in einer Stunde mit 472 Teilen Schwefelsäure (96 %ig) versetzt. Das Reaktionsgemisch wird 3 Stunden bei 20 bis 25°C weiter gerührt und anschließend über eine Nutsche filtriert. Das schwarzbraune Indigosulfat wird auf der Nutsche mit 1 250 Teilen einer 3 %igen Wasserstoffperoxidlösung von 20 bis 25°C gewaschen.

Anschließend wird der durch Hydrolyse rückgebildete Indigo mit 150 Teilen Wasser nachgewaschen und schließlich getrocknet.

Erhalten werden 48,8 Teile (97,6 % d.Th.) Indigo mit einem Reingehalt von 95,2 % (fotometrisch gemessen). Der Farbstoff enthält 0,02 % Anilin und 0,005 % N-Methylanilin.

### Beispiel 5

In einem Rührreaktor werden 181 Teile wäßriger Indigoteig, enthaltend 51,2 Teile Indigo, mit 170 Teilen 5 %iger Schwefelsäure bei 20 bis 25°C verrührt. Nach dem Erhitzen des Gemisches auf 90°C läßt man bei dieser Temperatur innerhalb von 2 Stunden unter Rühren 13,2 Teile einer 10 %igen wäßrigen Wasserstoffperoxidlösung zutropfen. Es wird 2 Stunden bei 90°C nachgerührt, heiß abgesaugt und mit Wasser neutral gewaschen. Nach dem Trocknen erhält man 50,4 Teile Indigo (98,4 % d.Th.) mit einem Reingehalt von 97,0 % (fotometrisch gemessen).

## Patentansprüche

1. Verfahren zur Reinigung von Indigo, dadurch gekennzeichnet, daß man den Indigo mit Schwefelsäure in Indigosulfat überführt, dieses gegebenenfalls abtrennt, anschließend unter Rückbildung von Indigo hydrolysiert und mit verdünnter Wasserstoffperoxidlösung behandelt, wobei die Hydrolyse auch durch Zugabe der wäßrigen Wasserstoffperoxidlösung erfolgen kann.

2. Verfahren gemäß Anspruch 1, dadurch gekennzeichnet, daß man Indigo mit 65 bis 85 %iger, bevorzugt 75 %iger, Schwefelsäure im Gewichtsverhältnis 1:10 bis 1:20, bevorzugt 1:15, umsetzt.

3. Verfahren gemäß Anspruch 1, dadurch gekennzeichnet, daß man die Umsetzung von Indigo mit Schwefelsäure in 0,5 bis 3 Stunden, bevorzugt in 1 Stunde, bei 0 bis 60°C, bevorzugt bei 25°C, durchführt.

4. Verfahren gemäß Anspruch 1, dadurch gekennzeichnet, daß man den rückgebildeten Indigo mit wäßrigschwefelsaurer 0,1 bis 10,0 %iger, bevorzugt 3 %iger, Wasserstoffperoxidlösung im Gewichtsverhältnis 1:10 bis 1:40, bevorzugt 1:20 bis 1:30, behandelt.

5. Verfahren gemäß Anspruch 4, dadurch gekennzeichnet, daß man die Wasserstoffperoxidbehandlung von Indigo bei 0 bis 100°C, bevorzugt bei 20 bis 90°C, durchführt.

## Claims

1. A process for the purification of indigo, which comprises reacting the indigo with sulfuric acid to give indigo sulfate, separating off, if appropriate, and subsequently hydrolyzing the latter to re-form indigo, and treating the dye with dilute hydrogen peroxide solution, it also being possible to perform the hydrolysis by adding the aqueous hydrogen peroxide solution.

2. A process as claimed in claim 1, wherein indigo is reacted with from 65 to 85% strength, preferably with 75% strength, sulfuric acid in a weight ratio of from 1:10 to 1:20, preferably 1:15.

3. A process as claimed in claim 1, wherein the reaction of indigo with sulfuric acid is carried out at from 0 to 60°C, preferably at 25°C, for from 0.5 to 3 hours, preferably for 1 hour.

4. A process as claimed in claim 1, wherein the reformed indigo is treated with an aqueous, from 0.1 to 10.0% strength, preferably 3% strength, sulfuric acid solution of hydrogen peroxide in a weight ratio of from 1:10 to 1:40, preferably from 1:20 to 1:30.

5. A process as claimed in claim 4, wherein the hydrogen peroxide treatment of indigo is carried out at from 0 to 100°C, preferably at from 20 to 90°C.

## Revendications

1. Procédé de purification de l'indigo, caractérisé en ce qu'on convertit l'indigo en sulfate d'indigo avec de l'acide sulfurique, qu'on isole celui-ci le cas échéant, qu'on l'hydrolyse ensuite tout en reformant de l'indigo et qu'on traite celui-ci avec une solution diluée de peroxyde d'hydrogène, l'hydrolyse pouvant également s'effectuer par addition de la solution aqueuse de peroxyde d'hydrogène.

2. Procédé selon la revendication 1, caractérisé en ce qu'on fait réagir de l'indigo avec de l'acide sulfurique à 65 à 85 %, de préférence à 75 %, dans un rapport massique de 1 : 10 à 1 : 20, de préférence de 1 : 15.

3. Procédé selon la revendication 1, caractérisé en ce qu'on effectue la réaction de l'indigo avec l'acide sulfurique en 0,5 à 3 heures, de préférence en 1 heure, à 0 à 60 °C, de préférence à 25 °C.

4. Procédé selon la revendication 1, caractérisé en ce qu'on traite l'indigo reformé avec une solution sulfurique aqueuse de peroxyde d'hydrogène à 0,1 à 10,0 %, de préférence à 3 %, dans un rapport massique de 1 : 10 à 1 : 40, de préférence de 1 : 20 à 1 : 30.

5. Procédé selon la revendication 4, caractérisé en ce qu'on effectue le traitement de l'indigo par le peroxyde d'hydrogène à 0 à 100 °C, de préférence à 20 à 90 °C.
